# EUROPÄISCHE PATENTANMELDUNG

(11) **EP 0 673 680 A2**
(43) Veröffentlichungstag der Anmeldung: **27.09.1995**
(21) Anmeldenummer: 95103922.1
(22) Anmeldetag: 17.03.1995
(51) Int. Cl.: B01L 9/06, B65D 5/18, B65D 5/50

(54) **Ständer für Analysegefässe**

(30) Priorität: 22.03.1994 DE 4409772
(71) Anmelder: BOEHRINGER MANNHEIM GMBH, D-68298 Mannheim (DE)
(72) Erfinder: Schels, Hans, Dr., D-80687 München (DE); Menzler, Horst, D-82347 Bernried (DE)

(57) **Zusammenfassung**

Es wird ein Ständer (1) für Analysegefäße beschrieben, der aus einem Papierprodukt gefertigt ist. Der Ständer besitzt mehrere Kammern zur Aufnahme der Analysegefäße und Haltevorrichtungen (3) in den Kammern, welche die Analysegefäße durch mechanischen Druck haltern. Es werden weiterhin Einschübe (30) beschrieben, die aus Papierprodukten gefertigt sind und die in bereits bekannte Ständer eingeschoben werden können um dort zur Halterung von Analysegefäßen zu dienen.

## Beschreibung

Die Erfindung betrifft einen Ständer für Analysegefäße mit Kammern zur Aufnahme der Analysegefäße, die mindestens eine Öffnung zur Einführung der Gefäße besitzen wobei sich in jeder der Kammern mindestens eine Haltevorrichtung befindet, welche auf ein Analysengefäß in der Kammer einen mechanischen Druck ausübt und der Ständer aus einem Papierprodukt gefertigt ist.

Im Stand der Technik werden Vorrichtungen zur Aufbewahrung von Probengefäßen im allgemeinen als Packs bezeichnet. In der Offenlegungsschrift DE 3405292 wird ein Pack beschrieben das aus einem länglichen im Querschnitt im wesentlichen rechteckförmigen Metallkörper besteht und entlang seiner Mittelebene nach oben offene Aufnahmeöffnungen besitzt. Diese Aufnahmeöffnungen sind kreisrunde Bohrungen, die einen Innendurchmesser besitzen der größer als der Außendurchmesser der Probengefäße ist.

In klinischen Analysengeräten der Firma Hitachi werden Vorrichtungen zur Aufbewahrung von Gefäßen verwendet, die im wesentlichen aus Plastik bestehen. In einem rechteckigen, quaderförmigen Grundkörper sind zueinander parallele, zylindrische Bohrungen angebracht. In dieser Vorrichtung zu transportierende Gefäße werden in die genannten zylindrischen Bohrungen eingestellt. An der nach außen gewandten Kopfseite der zylindrischen Bohrungen besteht die Möglichkeit, Kunststoffringe in die Bohrungen einzustecken, um ihren Innendurchmesser zu verringern. Auf diese Weise wird erreicht, daß auch Gefäße unterschiedlichen Durchmessers in die Vorrichtung eingestellt werden können. Auf der kreisrunden Stirnfläche der zylindrischen Bohrung im Inneren der Vorrichtung sind Halterungen aus Gummi angebracht, welche die Form von Saugnäpfen besitzen. Durch diese Halterungen wird ein Aufstoßen der Gefäße auf den Boden der Bohrungen abgefedert.

Der Stand der Technik weist den Nachteil auf, daß eine Bewegung der Gefäße senkrecht zur Achse der Bohrungen im Bereich von Millimetern möglich ist. Ein solches Wackeln der Gefäße kann beispielsweise zu Meßwertverfälschungen führen, wenn an dem Inhalt der Gefäße Messungen vorgenommen werden, wahrend sie sich in der Haltevorrichtung befinden. Ein Wackeln der Gefäße wirkt ebenfalls auf einen Benutzer nachteilig, der dies beim Transport der Gefäße in der Haltevorrichtung als Instabilität empfindet. Die genannten Haltevorrichtungen von Hitachi weisen zwar eine Halterung an der Unterseite der Gefäße auf, jedoch erschwert die Haftreibung der Gefäße mit den Gummihalterungen eine Drehung der Gefäße um ihre Achse. Dies kann beispielsweise dann notwendig sein, wem Messungen an den Gefäßen vorgenommen werden sollen, oder Kennungen auf den Gefäßen abgelesen werden.

Sowohl die in DE 3405292 als auch die von Hitachi beschriebenen Haltevorrichtungen weisen aufgrund ihrer Materialien den Nachteil auf, daß sie schwer recyclebar sind und daß diese Materialien als wenig umweltverträglich gelten. Die im stand der Technik beschriebenen Vorrichtungen besitzen Herstellkosten, die einer Einmalverwendung entgegenstehen.

Aufgabe der Erfindung war es, einen Ständer für Analysegefäße zur Verfügung zu stellen, der es ermöglicht, Gefäße unterschiedlichen Durchmessers so aufzunehmen, daß ein Wackeln der Gefäße weitestgehend vermieden wird, jedoch eine Drehung der Gefäße um ihre Achse, während sie sich in der Vorrichtung befinden, möglich ist. Ferner war es Aufgabe der Erfindung einen Ständer zur Verfügung zu stellen, der aus wenig umweltbelastenden und leicht recyclebaren Materialien gefertigt werden kann.

Diese Aufgaben werden erfindungsgemäße durch einen Ständer für Analysegefäße mit Kammern zur Aufnahme der Analysegefäße gelöst, wobei die Kammern mindestens eine Öffnung zur Einführung der Analysegefäße besitzen, und sich in jeder der Kammern mindestens eine Haltevorrichtung befindet, die auf ein Analysengefäß innerhalb einer Kammer einen mechanischen Druck ausübt und der Ständer aus einem Papierstoff gefertigt ist.

Mit Analysegefäßen sind im Rahmen dieser Erfindung vor allem solche gemeint, die dem Fachmann als Analysegefäße oder Reagenzgefäße bekannt sind, wie beispielsweise Reagenzgläser, Primär- und Sekundärgefäße. Die Gestalt dieser Analysegefäße ist in der Regel zylindrisch, kann jedoch von dieser Gestalt auch abweichen. Als Gefäßmaterialien sind im Stand der Technik vor allem Kunststoffe, Gläser und Metalle bekannt.

Erfindungsgemäße Ständer für Analysegefäße können verschiedenartige äußere Gestalt besitzen. Eine günstige Form besitzt im wesentlichen die Form eines rechteckigen Quaders, bei dem die Kammern zum Einstellen der Gefäße in einer Reihe angeordnet sind. Es sind beispielsweise auch Anordnungen möglich, bei denen die Kammern in mehreren Reihen oder wabenförmig angeordnet sind. Die äußere Form des Ständers wird in erster Linie durch die Anordnung der Kammern bestimmt. Die Kammern sind erfindungsgemäß mechanisch starr miteinander verbunden.

Genannte Kammern besitzen jeweils mindestens eine Öffnung, durch die ein Gefäß in sie eingestellt werden kann. Die Kammern weisen in der Regel eine im wesentlichen zylindrische Gestalt auf, wobei die Grundfläche des Zylinders kreisförmig, drei- oder mehreckig oder auch unsymmetrisch geformt sein kann. Die Querschnittsfläche muß so beschaffen sein, daß sie größer ist als die Querschnittsfläche eines einzustellenden Gefäßes. In der Praxis werden vor allem Querschnittsflächen genutzt, die Durchmesser von kleiner als 1 cm bis zu wenigen cm aufweisen. Die jeweiligen Gefäße sollten einen Durchmesser aufweisen, der nicht wesentlich kleiner ist als der Durchmesser der Querschnittsfläche, da die Durchmesserdifferenz durch die Haltevorrichtungen überbrückt werden muß. Die Durchmesserdifferenz, die überbrückt werden kann, hängt von den Materialien der Haltevorrichtung ab. Werden beispielsweise Lamellen aus Metall verwendet, so lassen sich Abstände bis 0,5 cm leicht überbrücken.

Die Länge der Kammern ist bevorzugt so beschaffen, daß ein in die Kammer eingestelltes Gefäß aus der Kammeröffnung herausragt. Zusätzlich zu der mindestens einen Öffnung jeder Kammer, durch die ein Gefäß eingestellt wird, kann jede Kammer noch zusätzliche Öffnungen auf ihrer Mantelfläche besitzen. Durch diese zusätzlichen Öffnungen ist beispielsweise eine Durchstrahlung eines Gefäßes innerhalb der Kammer für Meßzwecke möglich.

Ein erfindungsgemäßer Ständer kann eine Vielzahl von Kammern besitzen, bevorzugt sind jedoch 2 bis 20 und besonders bevorzugt 4 bis 6 Kammern.

Zugehörig zu jeder Kammer existieren Haltevorrichtungen. Die Haltevorrichtungen werden bei Einstellung eines Gefäßes in die jeweilige Kammer aus ihrer Ruhelage ausgelenkt und bewirken aufgrund von Rückstellkräften eine Halterung des Gefäßes. Die Haltevorrichtungen können beispielsweise durch Schaumgummieinlagen an der Innenseite der Kammer realisiert werden. Befindet sich ein Gefäß innerhalb der Kammer, so wird der Schaumgummi zusammengedrückt und haltert aufgrund seiner Neigung, sich auszudehnen, das Gefäß. Eine weitere Möglichkeit besteht darin, an einer oder mehreren Stellen innerhalb der Kammer parallel zur Querschnittsfläche der Kammer Ringe aus einer dehnbaren Plastikfolie anzubringen. Wird ein Gefäß in die Kammer eingestellt, so dehnt sich das Plastik und hält aufgrund seiner Rückstellkräfte das Gefäß innerhalb der Kammer.

Eine vorbezugte Ausführungsform der Haltevorrichtung besteht darin, daß innerhalb der Kammer Lamellen angebracht werden, die beim Einstellen eines Gefäßes aus ihrer Ruhelage ausgelenkt werden. Die Rückstellkräfte der Lamellen bewirken einen Druck auf das Gefäß. Die Lamellen sind bevorzugt so angeordnet, daß sie durch das Gefäß in einer Ebene parallel zur Längsachse der Kammer bewegt werden. Bei einer Lamelle pro Kammer wird ein Gefäß innerhalb der Kammer gegen die der Lamelle gegenüberliegende Kammerwand gedrückt. Bevorzugt sind jedoch Haltevorrichtungen, die zwei oder mehr Lamellen beinhalten, die im wesentlichen in einer Ebene senkrecht zur Längsachse der Kammer angeordnet sind. Die Lamellen bilden dann einen Kranz um das Gefäß, so daß das Gefäß im wesentlichen in der Mitte der Kammer gehaltert wird. In einer bevorzugten Ausführungsform fallen bei dieser Art der Halterung Längsachse des Gefäßes und Längsachse der Kammer im wesentlichen zusammen. Jede Kammer kann 1,2 oder mehrere Haltevorrichtungen besitzen, die in zueinander parallelen Ebenen angeordnet sind. Bevorzugt sind 2 Haltevorrichtungen, mit einer ersten Haltevorrichtung an der äußeren Öffnung der Kammer und einer zweiten Haltevorrichtung ein bis wenige Zentimeter entfernt innerhalb der Kammer.

Auch eine Ausführungsform, bei der Ständer und Haltevorrichtungen aus gleichem Material bestehen besitzt Vorteile, da in diesem Fall keine Trennung verschiedener Materialien vor dem Recycling notwendig ist. Besonders bevorzugt ist es, wenn Ständer und Haltevorrichtung eine einteilige Einheit bildet

Es ist weiterhin möglich, daß die Einschübe in einen Ständer eingesteckt werden. Bei dieser Ausführungsform können Ständer und Einschübe aus unterschiedlichen Materialien gefertigt sein. Die Einschübe weisen Haltevorrichtungen auf, die denen der Ständer entsprechen. Besonders vorteilhaft sind Einschübe aus Papierprodukten.

Ein besonderer Vorteil dieser Ausführungsform liegt darin, daß bereits vorhandene Ständer für Analysegefäß an Gefäße mit geringeren Durchmessern angepaßt werden können. Ist beispielsweise ein Rack fest in einen Analyseautomaten integriert, so kann die Funktionsweise des Analyseautomaten auf neue Gefäß erweitert werden, ohne daß aufwendige Umbauarbeiten notwendig sind.

Als Materialien für einen erfindungsgemäßen Ständer oder Einschübe sind sogenannte Papierprodukte geeignet. Dieser Oberbegriff ist in Meyers Lexikon (Technik und exakte Naturwissenschaften) definiert und umfaßt beispielsweise Kartone, Pappen und Papiere. Genannte Materialien sind dadurch gekennzeichnet, daß sie eine geringe Umweltbelastung verursachen und zudem leicht recyclebar sind. Dies ermöglicht eine einmalige oder eine Verwendung für wenige Prozesse, so daß verunreinigte Ständer eliminiert werden können. Dies kommt besonders den im Bereich der klinischen Analyse hohen Anforderungen an die Hygiene zustatten.

Bei Verwendung von Papierprodukten können erfindungsgemäße Ständer bevorzugt aus Faltbögen gefertigt werden. Ein Vorteil von Vorrichtungen, die aus Faltbögen erstellt werden ist es, daß sie ein geringes Packungsvolumen aufweisen, so daß sich der Versand einfacher und kostengünstiger gestaltet. Der Endverbraucher kann einen erfindungsgemäßen Ständer mit wenigen Handgriffen selbst zusammensetzen. In der Produktion sind genannte Faltbögen ebenfalls vorteilhaft, da sie durch Ausstanzen aus Bögen einfach hergestellt werden können. Das Ausstanzen kann so erfolgen, daß lamellenförmige Haltevorrichtungen gebildet werden. Diese einteilige Ausführungsform von Ständer und Haltevorrichtungen ist besonders bevorzugt, da Arbeitsschritte zur Einbringung von Haltevorrichtungen in den Ständer entfallen.

Ständer für Analysegefäße können zusätzlich zu den bereits beschriebenen Merkmalen ebenfalls Führungselemente aufweisen, die einen Transport der Vorrichtung innerhalb eines automatischen Gerätes, beispielsweise eines Analysenautomaten, ermöglichen. Führungselemente können unter anderem Einkerbungen, Schienen oder Materialvorsprünge am Ständer sein.

Vorteilhaft für den Einsatz eines erfindungsgemäßen Ständers sind am Ständer angebrachte Codierungen. Geeignet sind beispielsweise ein- oder zweidimensionale Barcodes, alphanumerische Zeichen, Farbcodes oder RF-ID-Chips. Die Codierungen können beispielsweise eine Kennung der jeweiligen Vorrichtung beinhalten und auch Daten, die einen Analyseablauf steuern.

Ein erfindungsgemäßer Ständer besitzt die günstige Eigenschaft, daß in der Haltevorrichtung befindliche Gefäß fixiert werden, so daß sie nicht innerhalb der Kammer wackeln und außerdem eine genauer definierte Position einnehmen als dies ohne Haltevorrichtung der Fall ist. Dies führt dazu, daß ein Benutzer die Vorrichtung als stabiler empfindet, da ein Wackeln der Gefäße unterdrückt wird. Eine genauere Positionierung ermöglicht ein verbessertes Ablesen von aufden Gefäßen angebrachten Kodierungen oder eine bessere Untersuchung des Gefäßes, beispielsweise zur Füllstandsbestimmung oder Analyse des Gefäßinhaltes.

Erfindungsgemäße Ständer und Haltevorrichtungen sind exemplarisch in den Figuren 1 bis 4 dargestellt.
Figur 1: Ständer für Anaslysegefäße
Figur 2: Faltbogen
Figur 3: Erster Einschub
Figur 4: Zweiter Einschub

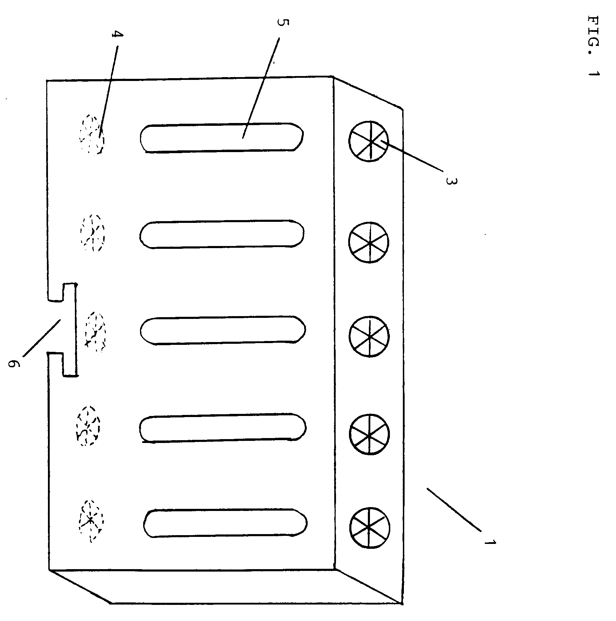

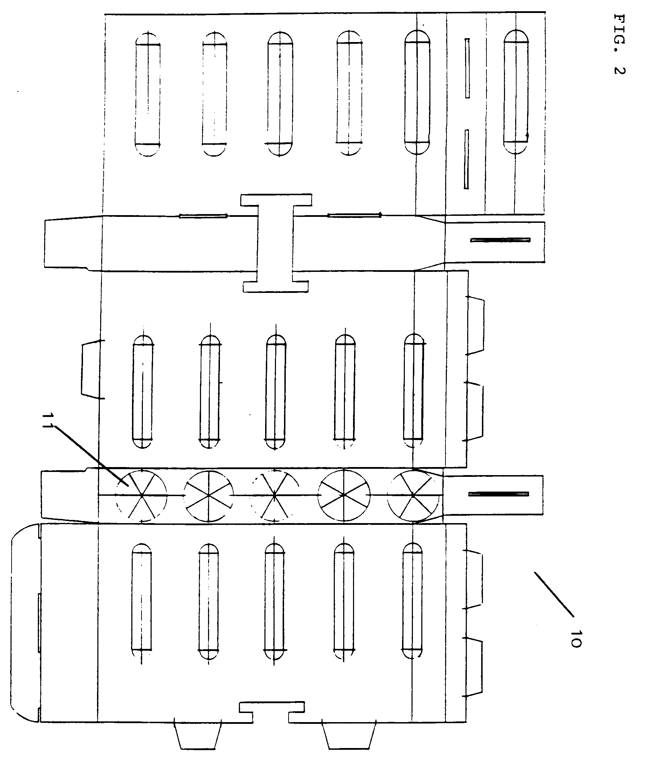

Eine besonders bevorzugte Ausführungsform eines Ständers für Analysegefäße ist in den Figuren 1 und 2 dargestellt. Figur 1 zeigt einen Ständer (1), der aus dem Karton 380 g/m² der Firma Frovi gefertigt ist. Im Inneren ist der Ständer hohl, so daß die Kammern zur Aufnahme der Gefäße nicht voneinander abgetrennt sind, sondern ineinander übergehen. An der Oberseite des Ständers (1) befindet sich für jede Kammer eine Haltevorrichtung (3), die aus einem Kranz von Lamellen besteht. Innerhalb jeder Kammer befindet sich eine zweite Haltevorrichtung (4) unterhalb der ersten Haltevorrichtung (3). An der Vorder- und Rückseite des Ständers (1) sind jeweils Öffnungen (5) angebracht, durch die ein Gefäß, das sich in der Vorrichtung befindet, durchstrahlt werden kann oder eine aufdem Gefäß befindliche Kodierung abgelesen werden kann. An der Unterseite des Ständers (1) befindet sich eine Einkerbung als Führungselement (6). Innerhalb eines Analysengerätes kann ein Mechanismus in das Führungselement (6) eingreifen und den Ständer (1) durch die Apparatur bewegen.

Figur 2 zeigt ein Schnittmuster für einen Faltbogen (10), aus dem ein Ständer (1) gefertigt werden kann. Die Haltevorrichtungen (11) sind hier als Kreise mit Innenlinien dargestellt. Entlang der Innenlinien wird die Pappe vollständig durchtrennt und entlang des Kreises hingegen lediglich angeritzt. Wird ein Gefäß durch eine der Haltevorrichtungen (11) geschoben, so knicken die einzelnen Kreissegmente weg und es bilden sich die in Figur 1 dargestellten Lamellen aus. Entlang der durchgezogenen Linien wird das Schnittmuster (10) gefaltet. Ein geeignetes Zusammenfügen der einzelnen Flächen führt zu der in Figur 1 dargestellten Haltevorrichtung.

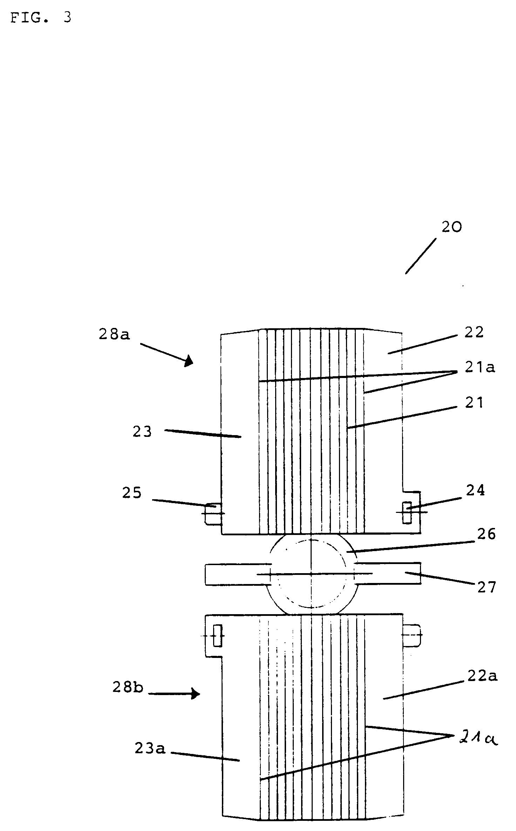

Figur 3 zeit einen Faltkarton für einen Einschub (20). Entlang der Linien (21) ist der Karton eingeritzt und damit biegungsfähhig. Zur Erstellung eines Einschubs wird der Faltkarton entlang der Linien (21) gebogen und entlang den Linien (21a) umgeknickt, so daß die Flächen (22) und (23) in einer Ebene liegen. Die Lasche (25) wird in die Öse (24) eingesteckt. Der gleiche Faltprozeß erfolgt für die gegenüberliegende Seite. Die beiden Seitenteile (28a) und (28b) werden gegenüber dem Kreisring (26) um 90° gekippt, so daß sich die Seiten (22), (22a) und (23), (23a) gegenüberliegen. Die Laschen (27) werden ebenfalls gegenüber dem Kreisring um 90 ° abgeknickt, so daß die Längsachse der Laschen (27) parallel zur Längsachse der Seitenteile (28a), (28b) ist. Die Haltevorrichtung (20) ist aus einem 280 g/m² Karton der Firma Frovi gefertigt. Der Kreisring besitzt eine Bohrung von 20 mm Durchmesser. Die Haltevorrichtung ist für Behälter mit einem Durchmesser von 9 bis 16 mm geeignet. Zur Inbetriebnahme wird die Haltevorrichtung in eine zylindrische Öffnung mit einem Durchmesser von etwa 26 mm eingestellt. Die durch die Seitenteile (28a), (28b) gebildeten, halbrunden Mantelflächen liegen an den Innenwandungen der zylindrischen Öffnung

Zur Halterung eines Gefäßes wird das Gefäß durch den Kreisring (26) eingeführt. Die Gefäßwandungen drücken gegen die Laschen (22, 22a) und (23, 23a). Aufgrund der Steifigkeit des Kartons wird das Gefäß mechanisch gehaltert.

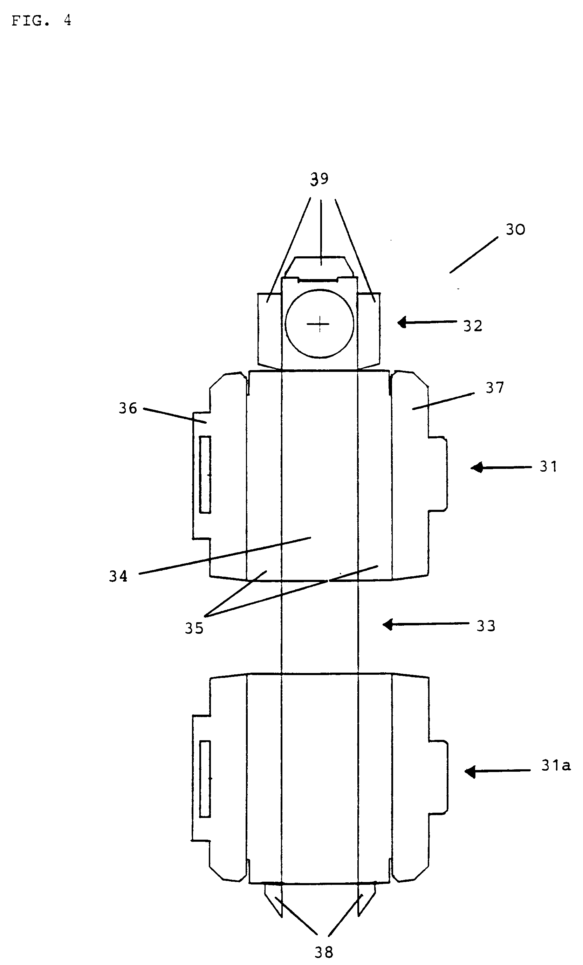

Figur 4 zeigt einen zweiten Einschub, der in ein Rack oder eine Ausnehmung mit rechteckiger Grundfläche eingestellt werden kann.

Der Einschub (30) besitzt zwei Seitenteile (31) und (31a), ein Bodenteil (33) und ein Kopfteil (32) mit einer kreisförmigen Öffnung. Der Faltkarton wird zusammengesetzt, indem die Elemente der Seitenteile jeweils um etwa 90 ° um die durchgezogenen Linien geknickt werden, so daß sich die Laschen (36) und (37) in einer Ebene befinden und durch Einsteck der Lasche (37) in die Öffnung der Lasche (36) miteinander verbunden werden können. Die Seitenteile (31) und (31a) werden gegenüber der Bodenfläche (33) um 90 ° geknickt, so daß die Seitenteile senkrecht über dem Boden stehen. Die Laschen (38) des Seitenteils und die Laschen (39) des Kopfteils werden abgeknickt und das gesamte Kopfteil (32) so geknickt, daß es sich waagerecht oberhalb der Bodenfläche (33) befindet und die beiden Seitenteile (31) und (31a) miteinander verbindet.

Wird ein Gefäß durch die Öffnung des Kopfteils eingeführt, so drückt es gegen die Laschen (36), (37) und gegen die entsprechenden Laschen des Seitenteils (31a). Die Haltevorrichtung wurde aus einem 380 g/m² Karton der Firma Frovi gefertigt und ist für Behälter mit einem Durchmesser von 9 bis 16 mm geeignet.

### Bezugszeichenliste

- (1): Ständer für Analysegefäße
- (3): erste Haltevorrichtung
- (4): zweite Haltevorrichtung
- (5): Öffnungen
- (6): Führungselement
- (10): Faltbogen
- (11): Haltevorrichtung
- (20): einsteckbare Haltevorrichtung
- (21), (21a): Ritzlinien
- (22), (22a),:
- (23), (23a): Laschen
- (24): Öse
- (25): Einstecklasche
- (26): Kreisring
- (27): Lasche
- (28a), (28b): Seitenteile
- (30): Einschub
- (31), (31a): Seitenteile
- (32): Kopfteil
- (33): Bodenteil
- (34), (35): Flächen des Seitenteils
- (36), (37): Laschen des Seitenteils
- (38), (39): Einstecklaschen

## Patentansprüche

1. Ständer (1) für Analysegefäße mit Kammern zur Aufnahme der Analysegefäße, wobei die Kammern mindestens eine Öffnung zur Einführung der Analysegefäße besitzen und sich in jeder der Kammern des Ständers mindestens eine Haltevorrichtung (3,4) befindet, die auf ein Analysegefäß innerhalb der Kammer einen mechanischen Druck ausübt,
dadurch gekennzeichnet, daß
der Ständer im wesentlichen aus einem Papierprodukt besteht.

2. Ständer gemäß Anspruch 1 mit Haltevorrichtungen in Form von Lammellen, die in die Öffnungen der Kammern hineinragen und die aufgrund ihrer Formsteifigkeit einen Gegendruck erzeugen, wenn sie aus ihrer Ruhelage bewegt werden.

3. Ständer gemäß Anspruch 1, mit Kammern, die eine erste Haltevorrichtung (3) an der äußeren Öffnung der Kammer und eine zweite Haltevorrichtung (4) ein bis wenige Zentimeter entfernt, innerhalb der Kammer besitzen.

4. Ständer gemäß einem der Ansprüche 1 oder 2, der aus einem Faltbogen gefertigt ist.

5. Ständer gemäß Anspruch 2, bei dem die mindestens eine Haltevorrichtung zwei bis 20 Lamellen beinhaltet.

6. Ständer gemäß Anspruch 1 oder 3, mit einem oder mehreren Führungselementen (6) für den Transport in einem Analysenautomaten.

7. Ständer gemäß Anspruch 1, mit 2 bis 20, bevorzugt 4 bis 6 Kammern.

8. Ständer gemäß Anspruch 1, an dem Kodierungen angebracht sind, die eine Identifizierung der Vorrichtung ermöglichen.

9. Ständer gemäß Anspruch 1 bis 4, bei der die Kammern und die Haltevorrichtungen aus gleichem Material gefertigt sind.

10. Ständer gemäß Anspruch 1, bei dem die Kammern mindestens eine zusätzliche Öffnung (5) senkrecht zur Längsachse der Kammer besitzen.

11. Einschub (20,30) zur Halterung von Analysegefäßen, mit Haltevorrichtungen (24,25,36,37), die auf ein Analysegefäß innerhalb des Einschubs einen mechanischen Druck ausüben.

12. Einschub (20,30) gemäß Anspruch 11, dadurch gekennzeichnet, daß er aus einem Papierprodukt besteht.

13. Ständer für Analysegefäße mit Kammern zur Aufnahme von Analysegefäßen, bei dem sich in den Kammern Einschübe mit Haltevorrichtungen befinden.

14. Verfahren zum Transport einer Mehrzahl von Analysegefäßen, bei dem Analysegefäße in einen Ständer gemäß Anspruch 1 oder 13 eingeführt werden und der Ständer transportiert wird.

15. Verwendung eines Ständers gemäß Anspruch 1 oder 13 zur Aufbewahrung und/oder zum Transport einer Mehrzahl von Analysegefäßen.
